(19) Europäisches Patentamt
European Patent Office
Office européen des brevets

(11) **EP 1 577 005 B1**

(12) **EUROPÄISCHE PATENTSCHRIFT**

(45) Veröffentlichungstag und Bekanntmachung des Hinweises auf die Patenterteilung:
**01.10.2008   Patentblatt 2008/40**

(51) Int Cl.:
***B01J 19/30*** *(2006.01)*

(21) Anmeldenummer: **04013940.4**

(22) Anmeldetag: **15.06.2004**

(54) **Füllkörper**

Packing element

Elément de remplissage

(84) Benannte Vertragsstaaten:
**AT BE BG CH CY CZ DE DK EE ES FI FR GB GR HU IE IT LI LU MC NL PL PT RO SE SI SK TR**

(30) Priorität: **15.03.2004   EP 04006070**

(43) Veröffentlichungstag der Anmeldung:
**21.09.2005   Patentblatt 2005/38**

(73) Patentinhaber: **Vereinigte Füllkörper-Fabriken GmbH & Co. KG**
**56235 Ransbach-Baumbach (DE)**

(72) Erfinder: **Schwämmlein, Kurt, Dr. Dipl.-Chem.**
**55545 Bad Kreuznach (DE)**

(74) Vertreter: **Quermann, Helmut et al**
**Quermann Sturm GbR**
**Patentanwälte**
**Unter den Eichen 7**
**65195 Wiesbaden (DE)**

(56) Entgegenhaltungen:
**DE-C- 335 471          GB-A- 255 770**
**US-A- 4 537 731          US-A- 5 688 444**
**US-A1- 2003 232 172**

**Beschreibung**

Die Erfindung betrifft einen Füllkörper, insbesondere für Stoff- und/oder Wärmeaustauschkolonnen, die von einer Gas- und/oder Flüssigkeitsströmung durchsetzt werden, wobei der Füllkörper zwei abgewandte Stirnflächen aufweist und ein Querschnitt des Füllkörpers gebildet ist, der mehrere nach außen gerichtete Vorsprünge aufweist, sowie mit die beiden Stirnflächen des Füllköpers durchsetzenden Durchgangskanälen.

Es ist bekannt, dass unterschiedlichste Füllkörper zum Zweck des Stoff- und Wärmeaustausches in Kolonnen, Reaktoren und ähnlichen Apparaten eingesetzt werden, um den Übergang einer oder mehrerer stofflicher oder nicht stofflicher Komponenten - d.h. zum Beispiel eines chemischen Stoffes wie Kohlendioxid, Salzsäure, Ethanol bzw. Energie - zwischen verschiedenen Phasen - d.h. zum Beispiel aus der Gasphase in eine flüssige Phase und umgekehrt, zwischen einer Gasphase und einer festen Phase (Feststoff), zwischen zwei flüssigen Phasen - möglichst effektiv zu gestalten. Große Bedeutung kommt dabei der Phasengrenzfläche zu, da durch diese die Komponenten hindurchtreten müssen. Technische Anwendungen sind beispielsweise gegeben bei der Absorption, Desorption (Strippung), Destillation/Rektifikation, Extraktion, direkten Gaskühlung, regenerativen Verbrennung, katalytische Stoffumwandlungen und andere verfahrenstechnische Trennprozesse oder ganz allgemein chemische oder thermische Prozesse.

Die Füllkörper müssen für alle Anwendungen eine geeignete mechanische Stabilität und eine geeignete Oberfläche aufweisen, sowie eine gute Durchmischung der Phasen erzeugen, ohne der Strömung der Phase(n) jedoch einen zu großen Druckverlust entgegenzusetzen. Das für den jeweiligen Trennprozess oder chemischen bzw. thermischen Prozess notwendige Schüttvolumen soll so gering wie möglich sein.

In der Regel muss jedoch ein geeigneter Kompromiss zwischen den entgegengesetzt verlaufenden Anforderungen - wie zum Beispiel geringer Druckverlust Versus geringe Schütthöhe bzw. kleines Schüttvolumen - gefunden werden. Bei keramischen Füllkörpern sind in der Regel dicke Materialwandstärken aus Gründen der mechanischen Stabilität Problemfaktoren hinsichtlich der Erzielung eines niedrigen Druckverlustes.

Ein Füllkörper der eingangs genannten Art ist aus der EP 0 579 234 B1 bekannt. Er weist eine im allgemeinen röhrenförmige Struktur auf, wobei die Röhrenwand an entgegengesetzten Enden von zueinander senkrechten Durchmessern nach innen verformt ist, um einen Querschnitt mit vier äußeren Vorsprüngen bzw. Flügeln zur Verfügung zu stellen. Demzufolge durchsetzen den Füllkörper zwei Durchgangskanäle. Der Füllkörper ist eben ausgebildet, d.h. es verlaufen die beiden abgewandten Stirnflächen parallel zueinander. Ein solcher Füllkörper weist zwar eine hohe Gesamtsymmetrie, womit eine Symmetrie des Füllkörpers bezüglich der drei aufeinander senkrecht stehenden Drehspiegelachsen verstanden wird, auf. Nachteilig ist bei dieser glatten Gestaltung allerdings, dass zwischen benachbarten Füllkörpern nur ein relativ geringer Raum für den Durchtritt der Fluidströmung verbleibt. Der bekannte Füllkörper besteht aus einem keramischen Werkstoff.

In der US 6 547 222 B2 ist ein keramischer Füllkörper beschrieben, der gewölbt ausgebildet ist. Auf den Querschnitt bezogen ist dieser Füllkörper mit drei erhöhten Bereichen und zwei dazwischen liegenden vertieften Bereichen versehen, wobei sowohl die vertieften als auch die erhöhten Bereiche mit Löchern versehen sind. Die Wölbung des Hohlkörpers erstreckt sich über einen Halbkreis. - Ein solcher Füllkörper ist sehr aufwendig herzustellen; dies ist einerseits durch seine relativ komplizierte Form, andererseits durch die Vielzahl einzubringender Öffnungen bedingt.

In dem Firmenprospekt "VFF - Ihr kompetenter Kolonnenausrüster und Berater" der Firma Vereinigte Füllkörperfabriken GmbH & Co. KG, D-56235 Ransbach-Baumbach, Druckschrift KP/HD/05/03/5000 ist u.a. ein Novalox-Sattelkörper beschrieben, ferner die Sonderform eines Füllkörpers, der eben, bei Dreiecksform gestaltet ist.

Aufgabe der vorliegenden Erfindung ist es, einen Füllkörper der eingangs genannten Art so weiter zu bilden, dass dieser sich durch ein Optimum hinsichtlich niedrigem Druckverlust und geeignet großer Fläche für den Stoffaustausch bzw. Wärmeaustausch auszeichnet.

Gelöst wird die Aufgabe bei einem Füllkörper der eingangs genannten Art dadurch, dass dieser eine gewölbte oder sattelförmige Gestalt aufweist und mindestens drei Durchgangskanäle vorgesehen sind.

Durch die Wölbung bzw. sattelförmige Ausgestaltung des Füllkörpers sinkt zwar die Gesamtsymmetrie, allerdings verringert sich dadurch auch der mögliche Umfang einer Flächenberührung zwischen den erfindungsgemäßen Füllkörpern in einer regellosen Schüttung. Hierbei ist es besonders vorteilhaft, die Wölbungsradien der, quasi bezogen auf die Aufsichtsebene, "oberen" bzw. "unteren" Oberfläche des erfindungsgemäßen Füllkörpers unterschiedlich groß werden zu lassen. Unter dem Aspekt eine Punktberührung erweist sich die sattelähnliche Form als besonders vorteilhaft. Ähnliches kann man durch eine Verdrillung des erfindungsgemäßen Füllkörpers erreichen, zum Beispiel in seiner Längsrichtung, weil es dann sehr viel weniger Ausrichtmöglichkeiten des erfindungsgemäßen Füllkörpers im Vergleich zur einfachsten und flachen, quasi quaderähnlichen Ausgestaltungsform in einer regellosen Schüttung gibt. Auf diese Weise ist durch die besondere Form des erfindungsgemäßen Füllkörpers auch in einer regellosen Schüttung gewährleistet, dass für eine Fluidströmung zwischen diesen Füllkörpern stets genug Raum vorhanden ist. Die spezifische Oberfläche lässt sich zum Beispiel durch eine Riffelung oder jede andere Profilierung deutlich erhöhen. Der bevorzugte Werkstoff des Füllkörpers ist Keramik oder Kunststoff.

Der erfindungsgemäße Füllkörper weist vorzugsweise eine solche Form auf, die durch eine Spiegelung an einer geeignet positionierten Spiegelebene bzw. die durch eine Drehung um zum Beispiel 180° um eine geeignet positionierte Drehachse wieder in die ursprüngliche Lage überführbar ist. Die einfachste Ausgestaltung des Füllkörpers sind zwei Dreiecksprismen, die durch zwei Stege an jeweils einer der Dreieckseitenflächen miteinander verbunden sind, wodurch eine mittige Einschnürung bzw. mittige Erweiterung und eine mittige Öffnung definiert ist. Der Füllkörper weist vorzugsweise in der Aufsicht mindestens sechs abgerundete Ecken auf, wobei die Aufsicht eine zur Aufsichtsebene senkrecht stehende Spiegelebene aufweist und diese Spiegelebene zwei in der Aufsicht gegenüberliegende, abgerundete Ecken des Füllkörpers enthalten kann.

Die in der Aufsicht längste Ausdehnung definiert die Gesamtlänge L des erfindungsgemäßen Füllkörpers und die größte Breite in der Aufsicht definiert die Gesamtbreite B des Füllkörpers. Der Füllkörper weist mindestens drei Öffnungen auf. Vorzugsweise sind mindestens zwei Öffnungen groß im Verhältnis zur Füllkörpergröße selbst. Die Öffnungen der Füllkörper sind insbesondere schlitzförmig, rund, angenähert dreieckig bzw. viereckig mit jeweils zumeist - jedoch nicht ausschließlich - abgerundeten Ecken. Es sind auch andere Öffnungsformen denkbar, zum Beispiel die Form eines Schmetterlingflügels. Durch die wenigen, großen Öffnungen lässt sich der Fluidstrom leichter und effektiver gestalten - d.h. mit geringerem Druckverlust - als durch viele kleine Öffnungen mit insgesamt gleicher Öffnungsfläche, da die Reibung eines Mediums bei vielen kleinen Öffnungen größer ist als bei wenigen großen. Die größte Ausdehnung parallel zur normalen der Aufsichtsebene definiert die Gesamthöhe H des erfindungsgemäßen Füllkörpers.

Weitere Merkmale der Erfindung sind in der nachfolgenden Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand diverser Ausführungsformen dargestellt, ohne hierauf beschränkt zu sein.

Es stellt dar:

Figur 1      eine räumliche Ansicht einer ersten Ausführungsform des erfindungsgemäßen Füllkörpers,

Figur 2      eine Draufsicht des in Figur 1 gezeigten Füllkörpers,

Figur 3      eine Seitenansicht des in den Figuren 1 und 2 gezeigten Füllkörpers,

Figur 4      eine Stirnansicht des in den Figuren 1 bis 3 gezeigten Füllkörpers,

Figur 5      eine zweite Ausführungsform des Füllkörpers, der grundsätzlich entsprechend der Ausführungsform des Füllkörpers gemäß den Figuren 1 bis 3 gestaltet ist, allerdings sattelförmig ist, in einer Seitenansicht,

Figur 6      eine dritte Ausführungsform des Füllkörpers, der entsprechend dem Füllkörper gemäß den Figuren 1 bis 3 gestaltet ist, bei um dessen Längsachse verdrillter Gestalt, in einer Stirnansicht,

Figur 7      eine vierte Ausführungsform des Füllkörpers, veranschaulicht in einer Draufsicht,

Figur 8      eine fünfte Ausführungsform des erfindungsgemäßen Füllkörpers, veranschaulicht in einer Draufsicht,

Figur 9      den in Figur 8 gezeigten Füllkörper in einer Seitenansicht,

Figur 10    den in den Figuren 8 und 9 gezeigten Füllkörper in einer Schnittdarstellung gemäß der Linie X-X in Figur 8 und

Figur 11    eine sechste Ausführungsform des Füllkörpers, die entsprechend derjenigen nach den Figuren 8 bis 10 gestaltet ist, allerdings sattelförmig, in einer Seitenansicht.

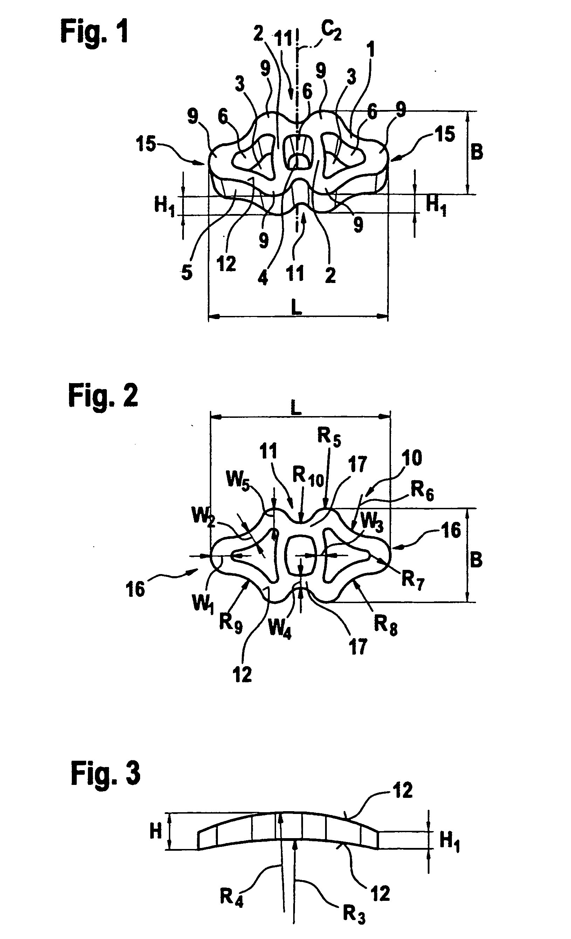

Die in den Figuren 1 bis 4 veranschaulichte gewölbte Gestaltung des erfindungsgemäßen Füllkörpers 10 weist bei der äußeren Wandung 1 mit der Höhe H1 eine mittige Einschnürung 11 und sechs abgerundete Ecken 9 auf, wobei die Gesamtlänge L des Füllkörpers 10 durch den größten Abstand zweier gegenüberliegender Ecken 9 bestimmt wird und die Gesamtbreite B durch den Abstand von zwei dazu senkrecht stehenden und gleichzeitig gegenüberliegenden Ecken 9 bestimmt wird.

Der Füllkörper 10 weist neben der äußeren Wandung 1 mit den in der Regel unterschiedlichen Wandstärken w1 und w5 und den abgerundeten Ecken sowie zumeist davon verschiedener Wandstärke w2 und w4 zwischen zwei abgerundeten Ecken noch zwei Stege 2 mit der Wandstärke w3 auf. Hierdurch sind zwei Dreiecksprismen 16 gebildet, die durch zwei Stege 17 an jeweils einer Dreiecksseite 2 miteinander verbunden sind. Somit ist/sind zwischen den beiden Stegen 17 ein mittlerer Durchgangskanal 4 und innerhalb des von den Dreiecksseiten umschlossenen Bereiches zwei äußere Durchgangskanäle 3 gebildet. Die Öffnungen 3, 4 weisen bestimmte Größe und Form - zum Beispiel rund, annähernd dreieckig bzw. mehreckig mit zum Beispiel abgerundeten Ecken - auf.

Die beiden Stirnflächen des Füllkörpers 10 sind mit den Bezugsziffern 12 bezeichnet. Die Außenflächen 5 der Wandung 1, die Stirnflächen 12 und/oder die den Öffnungen 3 und 4 zugeordneten Innenflächen 6 des Füllkörpers können glatt oder grob bzw. fein-poliert, zum Beispiel geriffelt, ausgeführt sein. In die Mitte der mittigen Öffnung 4 lässt sich eine Drehachse C2 (Füllkörperachse) hineingelegt denken, wobei nach einer 180° Drehung der Füllkörper in seinen symmetrischen Ausgestaltungsformen stets wieder identisch zur Ursprungslage erscheint. Die äußere Umrandungslinie des Füllkörpers in der Aufsicht weist aufgrund der sechs abgerundeten Ecken und der Einschnürungen verschiedene Bögen bzw. kreisähnliche bzw. ellipsenähnliche Abschnitte mit verschiedenen Radien bzw. allgemein unterschiedlichen Krümmungen R5, R6, R7, R8, R9 und R10 usw. auf.

Bei der Ausführungsform nach den Figuren 1 bis 4 ergeben sich konisch zulaufende diametrale Bereiche 15.

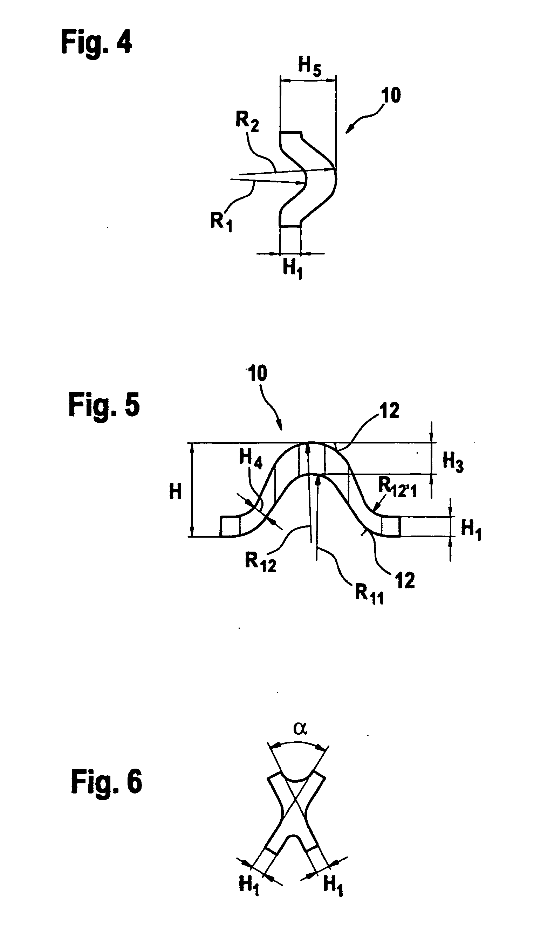

Bei der Ausführungsform des Füllkörpers gemäß Figuren 1 bis 4 ist dieser, bezogen auf die Blickrichtung gemäß Figur 3 nur mäßig gewölbt, hingegen, bezogen auf die Blickrichtung gemäß Figur 4 stärker gewölbt ausgebildet. Dabei können die Paare an Krümmungsradien bzw. ganz allgemein Krümmungsradien R1 und R2 bzw. R3 und R4 bzw. R11 und R12 jeweils gleich, d.h. R(i) = R(i + 1) oder auch verschieden sein, d.h. R(i) nicht gleich R(i + 1). Bei der Ausbildung des Füllkörpers mit sattelähnlicher Form, wie es zur Seitenansicht in Figur 5 veranschaulicht ist, können die drei Höhen H1, H3 und H4 gleich oder verschieden sein. Bei einer verdrillten Ausgestaltung des Füllkörpers, wie sie in der Stirnansicht in Figur 6 veranschaulicht ist, sind die aufgrund der Verdrillung in Längsrichtung entstehenden beiden endständigen Dreiecke um den Winkel $\alpha$ gegeneinander geneigt, wobei der Winkel $\alpha$ beispielsweise 30 bis 50° beträgt.

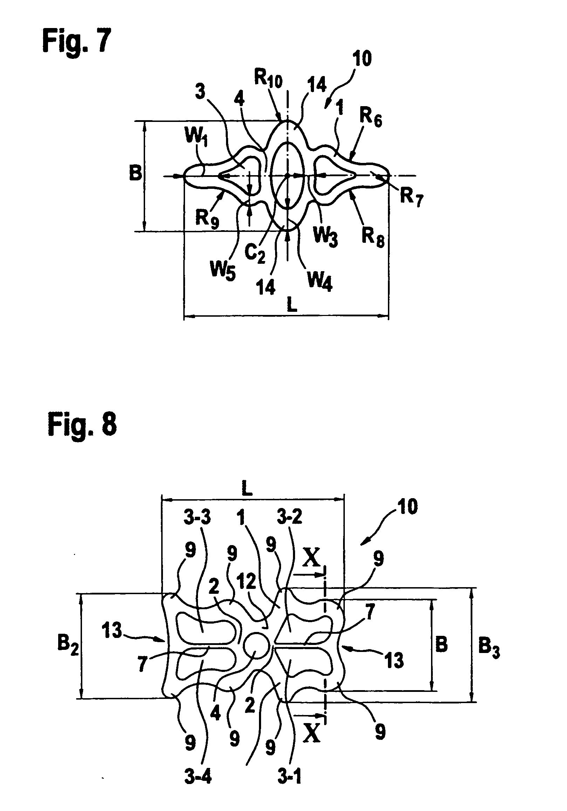

Figur 7 veranschaulicht eine gegenüber der Ausführungsform nach den Figuren 1 bis 4 modifizierte Gestaltung, bei der erweiterte Mittelbereiche 14 und acht Ecken 9 vorgesehen sind. Zwei gegenüberliegende Ecken - abgerundet oder nicht abgerundet - können auch um eine bestimmte Wegstrecke, zum Beispiel B1, gegeneinander versetzt werden. Somit ist das zuvor vorhandene Symmetrieelement - zum Beispiel eine Drehachse, die den Füllkörper nach einer Drehung um 180° wieder mit der Ursprungslage zur Deckung bringt, wenn diese Versetzung um B1 nicht vorhanden ist - dann nicht mehr vorhanden. Es resultiert nur eine mäßige Abweichung zur ursprünglichen Symmetrie, d.h. zur Symmetrie, wenn diese Versetzung um B1 nicht vorhanden ist.

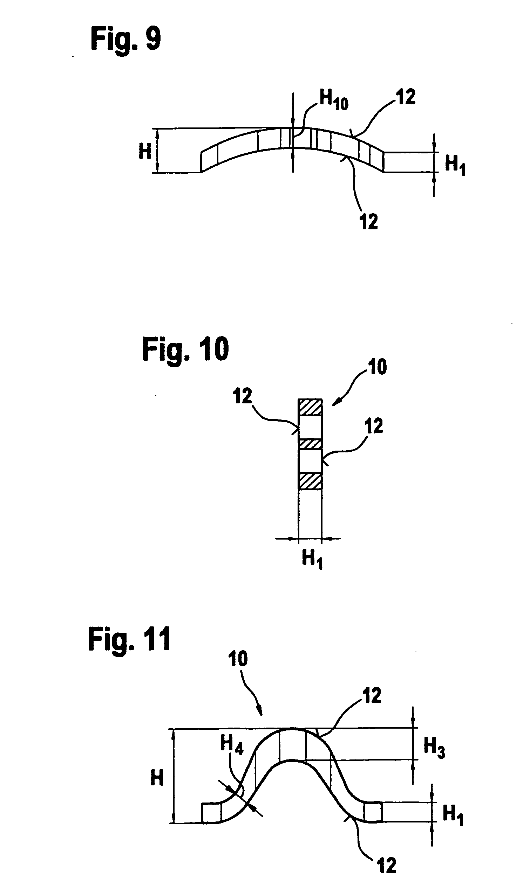

Die Figuren 8, 9 und 10 zeigen eine Ausgestaltung des Füllkörpers, der eine vergrößerte Oberfläche besitzt. Die Anzahl der abgerundeten Ecken 9 der Außenwandung 1 beträgt acht, ist jedoch nicht auf diese Anzahl beschränkt. Durch die Innenstege 2 und 5 sind nunmehr in der Aufsicht fünf Öffnungen 4, 3-1, 3-2, 3-3 und 3-4 in runder bzw. schmetterlingflügelähnlicher Form entstanden. Bei dieser Ausführungsform sind invers konisch zulaufende diametrale Bereiche 13 gebildet.

Damit innerhalb einer Schüttung zwischen den Füllkörpern im wesentlichen nur die unvermeidbare Punktberührung vorhanden ist, ist in der Aufsicht beispielsweise die äußere Umrandungslinie unsymmetrisch und/oder mit verschiedenen Krümmungen ausgeführt bzw. der erfindungsgemäße Füllkörper gewölbt oder sattelformähnlich gestaltet. Die äußere und/oder innere Oberfläche kann zusätzlich grob- bzw. fein-profiliert, zum Beispiel geriffelt, sein, um eine noch größere Oberfläche zu realisieren.

Selbstverständlich können die den Füllkörper u.a. laut der Darstellung der Figuren charakterisierenden Maße, Öffnungsanzahl und deren Form, nicht nur wie dargestellt, symmetrisch zu einer verbleibenden gedachten Füllkörperachse oder Spiegelebene angeordnet sein, sondern können auch zu dieser gedachten Füllkörperachse unsymmetrisch bzw. verzerrt angeordnet sein. Ein solcher Füllkörper weist letzten Endes gar kein Symmetrieelement mehr auf, um durch eine mäßige Abweichung von einer ursprünglichen Symmetrie einer Flächenberührung zwischen zwei Füllkörpern noch weiter entgegenzuwirken.

Sämtliche den erfindungsgemäßen Füllkörper charakterisierenden Maße, Öffnungsanzahl und deren Form, können beliebige Werte bzw. Gestalt annehmen. Die bevorzugte keramische Ausführung hat jedoch die Verhältnisse L:B:H von (1,7 ... 2,3) : (0,7 ... 1,0) : 1,0 mit einem Summenanteil von mindestens 30 %, insbesondere 30 bis 40 % an offenen Flächen, bezogen auf die durch die Umrandungslinie eingeschlossene Fläche, in der Aufsicht. Mindestens zwei Öffnungen sollten jeweils einen Anteil von ca. 10 ... 15 %, bezogen auf die von der Umrandungslinie eingeschlossene Fläche, in der Aufsicht aufweisen, ohne dass jedoch der Sinn der Erfindung oder der Werkstoff hierauf beschränkt sind.

Wie aus der nachfolgenden Tabelle 1 ersichtlich ist, besitzt der erfindungsgemäße Füllkörper in seiner sattelformähnlichen Ausführung trotz großer Oberfläche aufgrund seiner vorteilhaften großen Öffnungen in den Flächen einen besonders niedrigen Druckverlust - sowohl in der unberieselten als auch in der mit Waschflüssigkeit berieselten Schüttung - und hebt sich von dem Stand der Technik mit der bisherigen typischen Sattelform deutlich ab. Weiterhin ist aus der Tabelle klar ersichtlich, dass der erfindungsgemäße Füllkörper seine Vorteile auch gegenüber anderen, flach gestalteten Füllkörpern beibehält.

Verglichen wurden die folgenden drei Füllkörper aus Keramik - Füllkörper A, Füllkörper B und Füllkörper C, die sich wie folgt darstellen:

Füllkörper A:    erfindungsgemäßer Füllkörper#1,5, Keramik: L x B x H=56 x 26 x 30 (je in mm); Wandstärke: 4 mm; glatte Oberfläche; äußere Form: Sattelform, siehe Figuren 1, 2, 4, 5 "sattelförmig" (H = 30 mm, H1 = 11 mm; H3 = 11,5 mm; H4 = 7,5 mm; R11 nicht identisch R12)

Füllkörper B:    Letscherts Reform-Ring#1x, Keramik (VFF): L x B x H = 40 x 35 x 15 (je in mm): Wandstärke: 3 mm; glatte Oberfläche; äußere Form; flaches Dreieck, siehe VFF-Prospekt "Ihr kompetenter Ko-Ionnenausrüster und Berater", S. 9: Bild Sonderformen-rechts unten, 2003;

Füllkörper C:    gemäß der Ausführungsform nach der Figur 3 der EP 0 579 234 B1 : L x B x H = 50 x 32 x 12 (je in mm); Wandstärke: 4,5 mm; glatte Oberfläche; äußere Form: flach.

| Füllkörper (Keramik) | spez. Oberfläche (in der Schüttung) m²/m³ | Berieselungsdichte m³(m² x h) | Gasbelastungsfaktor Fv $\sqrt{Pa}$ | spez. Druckverlust (Pa/m) |
|---|---|---|---|---|
| A | 170 | 0 | 1,00 | 120 |
| A | 170 | 0 | 2,00 | 580 |
| B | 165 | 0 | 1,00 | 200 |
| B | 165 | 0 | 2,00 | 750 |
| C | 170 | 0 | 1,00 | 200 |
| C | 170 | 0 | 2,00 | 750 |
| A | 170 | 40 | 1,00 | 380 |
| A | 170 | 40 | 1,27 | 800 |
| A | 170 | 40 | 1,41 | 1314 |
| A | 170 | 40 | 1,44 | 1918 (Flutpunkt) |
| A | 170 | 80 | 0,75 | 687 |
| A | 170 | 80 | 1,01 | 1712 |
| A | 170 | 80 | 1,03 | 2256 (Flutpunkt) |
| B | 165 | 40 | 1,00 | 585 |
| B | 165 | 40 | 1,06 | 685 |
| B | 165 | 40 | 1,21 | 1069 |
| B | 165 | 40 | 1,38 | 2160 (Flutpunkt) |
| B | 165 | 80 | 0,71 | 865 |
| B | 165 | 80 | 0,90 | 2128 (Flutpunkt) |
| C | 170 | 40 | 1,00 | 680 |
| C | 170 | 40 | 1,03 | 745 |
| C | 170 | 40 | 1,12 | 1103 |
| C | 170 | 40 | 1,21 | 1967 (Flutpunkt) |
| C | 170 | 80 | 0,64 | 973 |
| C | 170 | 80 | 0,72 | 2121 (Flutpunkt) |

**Patentansprüche**

1. Füllkörper (10), insbesondere für Stoff- und/Wärmeaustauschkolonnen, die von einer Gas- und/oder Flüssigkeitsströmung durchsetzt werden, wobei der Füllkörper (10) zwei abgewandte Stirnflächen (12, 12) aufweist und ein Querschnitt des Füllkörpers (10) gebildet ist, der mehrere nach außen gerichtete Vorsprünge (9) aufweist, sowie mit die beiden Stirnflächen (12, 12) des Füllkörpers (10) durchsetzenden Durchgangskanälen (3, 4), **dadurch gekennzeichnet, dass** der Füllkörper (10) eine gewölbte Gestaltung mit gleich gerichtet gewölbten Stirnflächen (12,12) oder eine sattelförmige Gestaltung aufweist und mindestens drei Durchgangskanäle (3, 4, 3) vorgesehen sind.

2. Füllkörper nach Anspruch 1, **dadurch gekennzeichnet, dass** er aus keramischem Werkstoff oder Kunststoff besteht.

3. Füllkörper nach Anspruch 1 oder 2, **dadurch gekennzeichnet, dass** er drei Durchgangskanäle (3, 4, 3) aufweist.

4. Füllkörper nach einem der Ansprüche 1 bis 3, **gekennzeichnet durch** zwei Dreiecksprismen (16), die **durch** zwei Stege (17) an jeweils einer Dreiecksseitenfläche miteinander verbunden sind, wobei zwischen den beiden Stegen (17) ein mittlerer Durchgangskanal (4) und innerhalb des von den Dreiecksseiten umschlossenen Bereiches zwei äußere Durchgangskanäle (3, 3) gebildet sind.

5. Füllkörper nach einem der Ansprüche 1 bis 4, **dadurch gekennzeichnet, dass** er einen eingeschnürten oder erweiterten Mittelbereich (11) aufweist.

6. Füllkörper nach einem der Ansprüche 1 bis 5, **dadurch gekennzeichnet, dass** er sechs oder acht Ecken (9), insbesondere sechs oder acht abgerundete Ecken (9) aufweist.

7. Füllkörper nach einem der Ansprüche 1 bis 6, **dadurch gekennzeichnet, dass** diametrale Bereiche des Füllkörpers (10) konisch oder invers konisch verlaufen.

8. Füllkörper nach einem der Ansprüche 1 bis 7, **dadurch gekennzeichnet, dass** er bezüglich einer Drehachse (C2) symmetrisch ist.

9. Füllkörper nach einem der Ansprüche 1 bis 8, **dadurch gekennzeichnet, dass** das Verhältnis von Länge L : Breite B : Höhe H des Füllkörpers (1,7 ... 2,3) : (0,7 ... 1,0) : 1,0 ist.

10. Füllkörper nach einem der Ansprüche 1 bis 9, **dadurch gekennzeichnet, dass** die Öffnungen (3) mindestens zweier Durchgangskanäle im Vergleich zum Füllkörpernennmaß groß sind.

11. Füllkörper nach einem der Ansprüche 1 bis 10, **dadurch gekennzeichnet, dass**, bezogen auf eine Aufsicht auf eine der Stirnflächen (12) des Füllkörpers (10), der Summenanteil der Öffnungsfläche der Durchgangskanäle (3, 4) mindestens 30 %, insbesondere 30 bis 40 % der durch die Umrandungslinie des Füllkörpers (10) eingeschlossenen Fläche beträgt.

12. Füllkörper nach einem der Ansprüche 1 bis 11, **dadurch gekennzeichnet, dass** die Querschnittsfläche der Durchgangskanäle (3, 4) dreieckig, rund, schlitzförmig, viereckig ist.

13. Füllkörper nach einem der Ansprüche 1 bis 12, **dadurch gekennzeichnet, dass** er in seiner Längsrichtung verdrillt ausgebildet ist.

14. Füllkörper nach einem der Ansprüche 1 bis 13, **dadurch gekennzeichnet, dass** die Oberfläche (5, 6, 12) des Füllkörpers (10) eine Riffelung bzw. Profilierung zur Vergrößerung der Oberfläche aufweist.

## Claims

1. Filling body (10), in particular for mass transfer and/or heat exchange columns through which a gas and/or liquid flow passes, the filling body (10) having two end faces (12, 12) facing away from one another, and a cross section of the filling body (10) being formed, which has a plurality of outwardly directed projections (9), and with passage ducts (3, 4) passing through the two end faces (12, 12) of the filling body (10), **characterized in that** the filling body (10) has an arched configuration with co-directionally arched end faces (12, 12) or a saddle-shaped configuration, and at least three passage ducts (3, 4, 3) are provided.

2. Filling body according to Claim 1, **characterized in that** it consists of ceramic material or plastic.

3. Filling body according to Claim 1 or 2, **characterized in that** it has three passage ducts (3, 4, 3).

4. Filling body according to one of Claims 1 to 3, **characterized by** two triangular prisms (16) which are connected to one another by means of two webs (17) in each case on a triangular side face, a middle passage duct (4) being formed between the two webs (17) and two outer passage ducts (3, 3) being formed within the region surrounded by the triangular sides.

5. Filling body according to one of. Claims 1 to 4, **characterized in that** it has a contracted or a widened middle region (11).

6. Filling body according to one of Claims 1 to 5, **characterized in that** it has six or eight corners (9), in particular six or eight rounded corners (9).

7. Filling body according to one of Claims 1 to 6, **characterized in that** diametral regions of the filling body (10) run conically or inversely conically.

8. Filling body according to one of Claims 1 to 7, **characterized in that** it is symmetrical with respect to an axis of rotation (C2).

9. Filling body according to one of Claims 1 to 8, **characterized in that** the ratio of length L : width B : height H of the filling body is (1.7 ... 2.3) : (0.7 ... 1.0) : 1.0.

10. Filling body according to one of Claims 1 to 9, **characterized in that** the orifices (3) of at least two passage ducts are large in comparison with the nominal dimension of the filling body.

11. Filling body according to one of Claims 1 to 10, **characterized in that**, in respect of a top view of one of the end faces (12) of the filling body (10), the sum fraction of the orifice area of the passage ducts (3, 4) is at least 30%, in particular 30 to 40%, of the area enclosed by the boundary line of the filling body (10).

12. Filling body according to one of Claims 1 to 11, **characterized in that** the cross-sectional area of the passage ducts (3, 4) is triangular, round, slit-shaped or quadrangular.

13. Filling body according to one of Claims 1 to 12, **characterized in that** it is designed to be twisted in its longitudinal direction.

14. Filling body according to one of Claims 1 to 13, **characterized in that** the surface (5, 6, 12) of the filling body (10) has a grooving or profiling in order to enlarge the surface.

**Revendications**

1. Corps de remplissage (10), en particulier pour des colonnes de transfert de matière et de chaleur, qui sont traversées par un flux de gaz et/ou de liquide, le corps de remplissage (10) comportant deux faces frontales (12, 12) opposées l'une à l'autre et une section transversale du corps de remplissage (10) étant formée de façon à comporter plusieurs saillies (9) orientées vers l'extérieur, et avec des canaux de passage (3, 4) traversant les deux faces frontales (12, 12) du corps de remplissage (10), **caractérisé en ce que** le corps de remplissage (10) possède une forme de voûte avec des faces frontales voûtées dans la même direction (12, 12) ou bien une forme d'étrier, et **en ce qu'**au moins trois canaux de passage (3, 4, 3) sont prévus.

2. Corps de remplissage selon la revendication 1, **caractérisé en ce qu'**il est constitué de matière céramique ou plastique.

3. Corps de remplissage selon l'une des revendications 1 ou 2, **caractérisé en ce qu'**il comporte trois canaux de passage (3, 4, 3).

4. Corps de remplissage selon l'une des revendications 1 à 3, **caractérisé par** deux prismes triangulaires (16), qui sont reliés entre eux par deux branches (17) sur respectivement une face latérale du triangle, un canal de passage médian (4) étant formé entre les deux branches (17) et deux canaux de passage extérieurs (3, 3) étant formés à l'intérieur de la zone définie par les côtés du triangle.

5. Corps de remplissage selon l'une des revendications 1 à 4, **caractérisé en ce qu'**il comporte une zone centrale (11) rétrécie ou élargie.

6. Corps de remplissage selon l'une des revendications 1 à 5, **caractérisé en ce qu'**il comporte six ou huit coins (9), en particulier six ou huit coins arrondis (9).

7. Corps de remplissage selon l'une des revendications 1 à 6, **caractérisé en ce que** des zones diamétrales du corps de remplissage (10) s'étendent de façon conique ou inversement conique.

8. Corps de remplissage selon l'une des revendications 1 à 7, **caractérisé en ce qu'**il est symétrique par rapport à un axe de rotation (C2).

9. Corps de remplissage selon l'une des revendications 1 à 8, **caractérisé en ce que** le rapport longueur L : largeur 1 : hauteur H du corps de remplissage est de (1,7... 2,3) : (0,7... 1,0) : 1,0.

10. Corps de remplissage selon l'une des revendications 1 à 9, **caractérisé en ce que** les ouvertures (3) d'au moins deux canaux de passage sont grandes en comparaison avec la dimension nominale du corps de remplissage.

11. Corps de remplissage selon l'une des revendications 1 à 10, **caractérisé en ce que** par rapport à une vue de dessus sur l'une des faces frontales (12) du corps de remplissage (10), la part totale de la surface d'ouverture des canaux de passage (3, 4) est d'au moins 30 %, en particulier entre 30 et 40 % de la surface comprise à l'intérieur de la ligne de bordure du corps de remplissage (10).

12. Corps de remplissage selon l'une des revendications 1 à 11, **caractérisé en ce que** la surface de la section transversale des canaux de passage (3, 4) est en forme de triangle, de fente ou de quadrilatère.

13. Corps de remplissage selon l'une des revendications 1 à 12, **caractérisé en ce qu'**il est conçu de façon torsadée dans sa direction longitudinale.

14. Corps de remplissage selon l'une des revendications 1 à 13, **caractérisé en ce que** la surface (5, 6, 12) du corps de remplissage (10) comporte une cannelure ou un profilage, pour l'agrandissement de la surface.

# Fig. 1

# Fig. 2

# Fig. 3

**Fig. 4**

$H_5$

$R_2$

10

$R_1$

$H_1$

**Fig. 5**

10

12

$H_4$

$H_3$

H

$R_{12'1}$

$H_1$

$R_{12}$

$R_{11}$

12

**Fig. 6**

$\alpha$

$H_1$          $H_1$

## Fig. 7

## Fig. 8

**Fig. 9**

$H_{10}$  12

$H$  12

$H_1$

12

**Fig. 10**

10

12  12

$H_1$

**Fig. 11**

10

12

$H_4$  $H_3$

$H$

$H_1$

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0579234 B1
- US 6547222 B2
- KG 56235 D